# EUROPÄISCHE PATENTSCHRIFT

(11) **EP 2 894 373 B1**
(45) Veröffentlichungstag und Bekanntmachung des Hinweises auf die Patenterteilung: **19.07.2017**
(21) Anmeldenummer: 14000129.8
(22) Anmeldetag: 14.01.2014
(51) Int. Cl.: F16H 25/20

(54) **Spielfreie Spindelmutter**
Backlash-free spindle nut
Écrou de broche sans jeu

(43) Veröffentlichungstag der Anmeldung: 15.07.2015
(73) Patentinhaber: Lakeview Innovation Ltd., 6374 Buochs (CH)
(72) Erfinder: Samsfort, Peter, DE-79346 Endingen (DE)
(74) Vertreter: Grünecker Patent- und Rechtsanwälte PartG mbB

(56) Entgegenhaltungen:
- WO-A1-99/63248
- DE-A1- 2 546 109
- US-A- 6 131 478
- US-A1- 2012 192 662

## Beschreibung

Die vorliegende Erfindung betrifft eine spielfreie Spindelmutter nach dem Oberbegriff des unabhängigen Anspruchs 1.

Eine gattungsgemäße spielfreie Spindelmutter weist ein Gewinde auf, das mit einer Spindel in Eingriff gebracht werden kann. Ferner weist die Spindelmutter ein erstes Mutterteil mit einem ersten Innengewinde und ein relativ zum ersten Mutterteil verdrehbares zweites Mutterteil mit einem zweiten Innengewinde auf. Erstes Innengewinde und zweites Innengewinde bilden zusammen das Gewinde der Spindelmutter. Zur Erzeugung einer Vorspannung zwischen dem ersten Mutterteil und dem zweiten Mutterteil ist ferner ein elastisches Element, beispielsweise eine Feder, vorgesehen. Bei einer Spindelmutter der gattungsgemäßen Art ist die Vorspannung durch relative Verdrehung zwischen erstem Mutterteil und zweitem Mutterteil einstellbar.

Spielfreie Spindelmuttern sind aus dem Stand der Technik bekannt. Beispielsweise zeigt die DE 4 204 304 A1 eine einteilige Spindelmutter, deren mittlerer Bereich selbst als Feder ausgebildet und hierzu mehrfach geschlitzt ist. Sowohl der vordere als auch der hintere Endteil der Spindelmutter sind jeweils mit einem Gewindeeinsatz versehen. Dabei ist einer der beiden Gewindeeinsätze fest mit dem jeweiligen Endteil verbunden, der andere Gewindeeinsatz ist in die Spindelmutter eingeschraubt und kann daher justiert werden, um die Vorspannung stufenlos einzustellen. Die aus DE 4 204 304 A1 bekannte Spindelmutter ist äußerst aufwändig in der Herstellung.

Aus DE 605 09 125 T2 ist eine zweiteilige Spindelmutter bekannt, bei der die Vorspannung mittels einer Torsionsfeder erzeugt wird, die eine relative Verdrehung der beiden Mutterteile bewirkt. Die Vorspannung wirkt somit nicht in axialer Richtung, sondern in Umfangsrichtung. Bei der aus DE 695 09 125 T2 bekannten Spindelmutter kann die Vorspannung nicht eingestellt werden. Die Mutter baut aufgrund des Einsatzes einer Torsionsfeder relativ lang.

Eine zweiteilige Spindelmutter, bei der ebenfalls eine Torsionsfeder zum Einsatz kommt, ist in der EP 0 060 270 B1 gezeigt. Die Spannung der Torsionsfeder kann bei dieser Spindelmutter zwar eingestellt werden, jedoch besteht auch bei dieser Spindelmutter das Problem, dass relativ viel Bauraum in axialer Richtung beansprucht wird.

Bei der aus DE 697 23 674 T2 bekannten Spindelmutter wird die Vorspannung ebenfalls mittels einer Torsionsfeder erzeugt. Die Spindelmutter umfasst zwei Mutterteile, die gegen relative Verdrehung gesichert sind. Zwischen den beiden Mutterteilen besteht eine Führung, die dafür sorgt, dass das zweite Mutterteil relativ zum ersten Mutterteil in axialer Richtung verschieblich gelagert ist. In einem mittleren Bereich der Spindelmutter sind die beiden Mutterteile von einer hohlzylindrischen Hülse umschlossen, die an einem ihrer beiden Enden rampenförmig ausgebildete, in Umfangsrichtung verlaufende Zähne aufweist, die mit ebenfalls rampenförmig ausgebildeten Zähnen des ersten Mutterteils zusammenwirken. Die Anordnung sorgt dafür, dass die beiden Mutterteile in axialer Richtung auseinander gedrückt werden, sofern die zylindrische Hülse relativ zum ersten Mutterteil verdreht wird. Die vorgesehene Torsionsfeder sorgt dafür, dass zwischen der Hülse und dem ersten Mutterteil eine in Umfangsrichtung wirkende Vorspannung erzeugt wird. Aufgrund des relativ komplizierten Aufbaus wird auch bei der aus DE 69 723 674 T2 bekannten Spindelmutter relativ viel Bauraum in axialer Richtung beansprucht. Ferner kann die Vorspannung bei dieser Spindelmutter nicht eingestellt werden.

Eine relativ einfach aufgebaute zweiteilige Spindelmutter zeigt die DE 4 010 111 A1. Bei dieser Spindelmutter sind die beiden Mutterteile ebenfalls in axialer Richtung relativ zueinander verschieblich gelagert. Eine relative Verdrehung des zweiten Mutterteils gegenüber dem ersten Mutterteil ist ausgeschlossen. Zur Erzeugung der Vorspannung ist eine einfache Schraubenfeder vorgesehen, die dafür sorgt, dass die beiden Mutterteile in axialer Richtung auseinander gedrückt werden. Eine Einstellung der dadurch erzeugten Vorspannung ist nicht möglich.

Die DE 3 929 505 A1 beschreibt eine zweiteilige Spindelmutter, bei der auf eine Vorspannung verzichtet wird. Die Spindelmutter kann jedoch nachjustiert werden, um ein durch Verschleiß entstandenes Spiel zu beseitigen.

Eine spielfreie Spindelmutter der gattungsgemäßen Art ist schließlich aus DE 69 903 426 T2 bekannt. Die Spindelmutter besteht im Wesentlichen aus zwei Mutterteilen, die gegeneinander verdreht werden können. Für die Vorspannung sorgt ein Elastomerring, der zwischen den beiden Mutterteilen angeordnet ist und umso stärker komprimiert wird, je weiter die beiden Mutterteile gegeneinander verdreht werden. Zur Arretierung der relativen Drehlage der beiden Mutterteile ist eine Verzahnung vorgesehen. Eines der beiden Mutterteile weist hierzu eine Außenverzahnung auf, an dem anderen Mutterteil sind zwei in Umfangsrichtung betrachtet gegenüberliegend angeordnete federnde Laschen ausgebildet, die ebenfalls über eine Verzahnung verfügen und in die Außenverzahnung des ersten Mutterteils eingreifen. Die Verzahnung bildet gleichzeitig eine Axialführung zwischen dem ersten und dem zweiten Mutterteil. Die Außenverzahnung des ersten Mutterteils und die federnden Laschen des zweiten Mutterteils wirken nach Art einer Ratsche zusammen. Dies bedeutet, dass eine relative Verdrehung der beiden Mutterteile bei Aufwendung einer gewissen Kraft möglich ist. Die federnden Laschen des zweiten Mutterteils werden dabei kurzzeitig nach außen gedrückt und rasten anschließend um einen Zahn versetzt wieder in die Außenverzahnung des ersten Mutterteils ein. Die aus DE 699 03 426 T2 bekannte Spindelmutter baut in radialer Richtung relativ groß, da das außenverzahnte Mutterteil quasi durch das zweite Mutterteil umschlossen werden muss. Um einen vernünftigen Verstellumfang gewährleisten zu können, sind die federnden Laschen ferner relativ lang ausgebildet, was wiederum zu einer unerwünscht großen Baulänge führt.

Aufgabe der vorliegenden Erfindung ist es daher, eine spielfreie Spindelmutter der eingangs genannten Art derart weiterzubilden, dass eine möglichst kompakte Bauweise erzielbar ist und gleichzeitig gewährleistet wird, dass die Vorspannung eingestellt werden kann. Die Spindelmutter soll zudem einfach aufgebaut und kostengünstig herstellbar sein.

Die Aufgabe wird gelöst durch die Merkmale des unabhängigen Anspruchs 1. Demnach liegt bei einer spielfreien Spindelmutter der gattungsgemäßen Art eine erfindungsgemäße Lösung der Aufgabe vor, wenn die Spindelmutter ein Zwischenstück aufweist, das relativ zum ersten Mutterteil gegen Verdrehung gesichert ist, wobei das elastische Element zwischen dem ersten Mutterteil und dem Zwischenstück wirkt, und wobei die relative Verdrehung zwischen dem ersten Mutterteil und dem zweiten Mutterteil durch Arretierung einer relativen Drehlage zwischen dem zweiten Mutterteil und dem Zwischenstück arretierbar ist.

Die erfindungsgemäße Lösung bietet den Vorteil, dass die Spindelmutter flexibel aufgebaut ist und dabei äußerst kompakt gehalten werden kann. Durch das Vorsehen eines Zwischenstücks kann beispielsweise eine Verzahnung zur Arretierung der relativen Drehlage der beiden Mutterteile an hierfür besonders geeigneter Stelle vorgesehen werden. Anders als beispielsweise bei der aus DE 69 903 426 T2 bekannten Spindelmutter ist es nicht unbedingt erforderlich, eines der beiden Mutterteile mit einer Außenverzahnung zu versehen, und das andere Mutterteil so auszubilden, dass es das erste Mutterteil radial umschließt. Auch ist es bei der erfindungsgemäßen Lösung nicht erforderlich, dass die Verzahnung gleichzeitig eine Axialführung zwischen den beiden Mutterteilen gewährleisten muss und hierzu relativ breit ausgeführt ist.

Vorteilhafte Ausgestaltungen der vorliegenden Erfindung sind Gegenstand der Unteransprüche.

Die durch das elastische Element erzeugte Vorspannung wirkt vorzugsweise in axialer Richtung. Dabei ist es denkbar, die beiden Mutterteile entweder aneinander- oder auseinanderzudrücken. Letzteres ist besonders bevorzugt.

In einer bevorzugten Ausführungsform der vorliegenden Erfindung weist das Zwischenstück erste Formschlusselemente auf, die mit zweiten Formschlusselementen des zweiten Mutterteils in Eingriff bringbar sind, wobei die relative Drehlage zwischen dem zweiten Mutterteil und dem Zwischenstück durch den Eingriff zwischen den ersten und zweiten Formschlusselementen arretierbar ist. Auf diese Weise wird eine einfach realisierbare Arretierbarkeit erreicht. Die Formschlusselemente können beispielsweise gleichmäßig in Umfangsrichtung verteilt angeordnet sein, um das zweite Mutterteil in mehreren möglichen Drehlagen relativ zum ersten Mutterteil zu arretieren. Vorzugsweise sind die Formschlusselemente alle gleichartig ausgebildet, so dass ein einwandfreies Ineinandergreifen in den verschiedenen möglichen Drehlagen gewährleistet ist.

In einer weiteren besonders bevorzugten Ausführungsform der vorliegenden Erfindung sind die ersten Formschlusselemente an einem Axialanschlag des Zwischenstücks, und die zweiten Formschlusselemente an einem gegenüberliegenden Axialanschlag des zweiten Mutterteils ausgebildet. Dadurch wird eine besonders kompakte Bauweise, insbesondere in radialer Richtung, erreicht. Vorzugsweise sind die Formschlusselemente jeweils an einer äußeren Stirnfläche des Zwischenstücks bzw. des zweiten Mutterteils ausgebildet.

Weiter vorzugsweise sind die ersten bzw. zweiten Formschlusselemente jeweils durch die Zähne einer Verzahnung des Zwischenstücks bzw. des zweiten Mutterteils gebildet. Eine Verzahnung bietet eine besonders einfache Möglichkeit der Arretierung. Eine besonders kompakte Bauweise der Spindelmutter wird erreicht, wenn die Verzahnung als Stirnflächenverzahnung ausgeführt ist.

Eine besonders einfache und kostengünstige Herstellung ergibt sich, wenn die ersten und zweiten Formschlusselemente jeweils durch eine Rändelung des Zwischenstücks bzw. des zweiten Mutterteils gebildet sind. Auch hierbei ist es von Vorteil, wenn die Rändelung jeweils an einem Axialanschlag des betreffenden Bauteils ausgebildet ist.

In einer weiteren bevorzugten Ausführungsform der vorliegenden Erfindung ist das Zwischenstück mittels einer Führung axial verschieblich gegenüber dem ersten Mutterteil geführt. Dadurch wird auf einfache Weise erreicht, dass das Zwischenstück zwar in axialer Richtung relativ zum ersten Mutterteil verschiebbar ist, zwischen dem ersten Mutterteil und dem Zwischenstück jedoch eine Verdrehsicherung gegeben ist. Eine besonders einfache und kostengünstige Bauweise ergibt sich, wenn die Führung durch eine Ausnehmung des ersten Mutterteils realisiert ist, in welcher das Zwischenstück axial verschieblich gelagert ist.

In einer weiteren besonders bevorzugten Ausführungsform ist diese Ausnehmung zur Führung des Zwischenstücks in einem Vorsprung des ersten Mutterteils ausgebildet. Auch dies ist einer besonders einfachen und vor allen Dingen kompakten Bauweise zuträglich, insbesondere dann, wenn das elastische Element den Vorsprung radial umschließt. Der Vorsprung ist vorzugsweise hohlzylindrisch ausgeführt und weist einen geringeren Durchmesser auf als derjenige Teil des ersten Mutterteils, an dem der Vorsprung ausgebildet ist. Alternativ ist es auch denkbar, den hohlzylindrischen Vorsprung nicht mit einem geringeren Durchmesser auszuführen. In diesem Fall ist es hinsichtlich einer kompakten Bauweise von Vorteil, wenn das elastische Element von dem hohlzylindrischen Vorsprung zumindest teilweise umschlossen wird. Beispielsweise könnte eine hohlzylindrische Feder innerhalb des hohlzylindrischen Vorsprungs angeordnet werden.

Weiter von Vorteil ist es, wenn das zweite Mutterteil eine Ausnehmung zur Aufnahme des Vorsprungs aufweist. Durch ein Zusammenwirken zwischen Vorsprung und Ausnehmung kann gewährleistet werden, dass erstes Mutterteil und zweites Mutterteil stets konzentrisch zueinander angeordnet sind. Ferner kann dadurch auch eine Axialführung zwischen den beiden Bauteilen realisiert werden.

Die in dem Vorsprung ausgebildete Ausnehmung zur Führung des Zwischenstücks ist vorzugsweise symmetrisch in Bezug auf die Achse der Spindelmutter ausgeführt. Sie durchbricht den Vorsprung vorzugsweise in radialer Richtung, so dass das Zwischenstück in radialer Richtung über den Vorsprung hervorstehen kann.

In einer weiteren besonders bevorzugten Ausführungsform der vorliegenden Erfindung ist das elastische Element eine Federscheibe. Durch diese Ausführungsform kann die kompakte Bauweise der Spindelmutter, insbesondere in axialer Richtung, weiter optimiert werden. Zwar ist es auch denkbar, anstatt einer Federscheibe beispielsweise eine Spiralfeder einzusetzen. Spiralfedern erfordern jedoch eine bedeutend größere Baulänge. Um einen besonders großen Verstellbereich zu gewährleisten, ist es dabei weiter von Vorteil, wenn die Federscheibe als multigewellte Federscheibe ausgebildet ist.

In einer weiteren bevorzugten Ausführungsform ist das Zwischenstück im Wesentlichen plattenförmig ausgebildet, wobei das plattenförmige Zwischenstück senkrecht zur Achse der Spindelmutter ausgerichtet ist. Auch hierdurch kann die kompakte Bauweise der erfindungsgemäßen Spindelmutter weiter optimiert werden. Die Erfindung eignet sich besonders für kleine Spindelmuttern mit einer Länge < 20 mm und einer radialen Breite < 15 mm. Die Teile der Spindelmutter können aus unterschiedlichen Materialien gefertigt werden. Insbesondere eignet sich Metall zur Herstellung des ersten und zweiten Mutterteils sowie des Zwischenstücks. Auch eignen sich keramische Materialien, insbesondere Zirkoniumoxid. Im Übrigen kann auch eine Spindel, die mit der erfindungsgemäßen Spindelmutter zusammenwirkt, aus einem keramischen Material, insbesondere aus Zirkoniumoxid, bestehen.

Wie anhand der vorstehend erläuterten bevorzugten Ausführungsformen ersichtlich wird, bietet die Erfindung insbesondere den Vorteil, dass die erfindungsgemäße Spindelmutter aus wenigen, einfach aufgebauten Teilen zusammengesetzt werden kann. Vorzugsweise besteht die Spindelmutter aus insgesamt vier separaten Bauteilen, nämlich dem ersten und dem zweiten Mutterteil, dem Zwischenstück und einer Tellerfeder bzw. Federscheibe. Es ist jedoch auch denkbar, beispielsweise die Feder mit dem ersten Mutterteil zu verbinden. Je nachdem, welches Material für die einzelnen Bauteile gewählt wird, wäre es beispielsweise denkbar, die Feder mit dem ersten Mutterteil zu verlöten, zu verkleben, oder auf sonstige Weise zu verbinden. Auch zwischen der Feder und dem Zwischenstück ist eine derartige Verbindung prinzipiell denkbar.

Im Folgenden wird ein Ausführungsbeispiel der vorliegenden Erfindung anhand von Zeichnungen näher erläutert.

Es zeigen:
- Fig. 1: ein Ausführungsbeispiel einer erfindungsgemäßen Spindelmutter auf einer Spindel in Seitenansicht,
- Fig. 2: eine Explosionsdarstellung der erfindungsgemäßen Spindelmutter aus Fig. 1 in Schrägansicht,
- Fig. 3: die Explosionsdarstellung aus Fig. 2 von der anderen Seite,
- Fig. 4: eine perspektivische Ansicht der erfindungsgemäßen Spindelmutter aus Fig. 1,
- Fig. 5: einen Längsschnitt der erfindungsgemäßen Spindelmutter aus den Fig. 1 bis 4, und
- Fig. 6: einen Längsschnitt der erfindungsgemäßen Spindelmutter aus den Fig. 1 bis 5 bei härterer Vorspannung.

Für die folgenden Ausführungen gilt, dass gleiche Teile durch gleiche Bezugszeichen bezeichnet sind. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

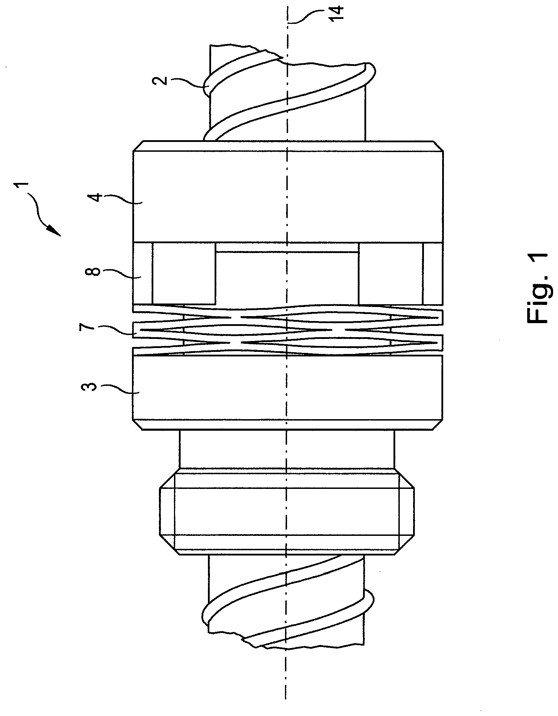

Fig. 1 zeigt ein Ausführungsbeispiel einer erfindungsgemäßen Spindelmutter 1, die auf eine Spindel 2 aufgeschraubt ist. Die Spindelmutter umfasst ein erstes Mutterteil 3 sowie ein zweites Mutterteil 4, jeweils mit einem Grundkörper, der im Wesentlichen rotationssymmetrisch in Bezug auf die Achse 14 der Spindelmutter ausgebildet ist. Zwischen dem ersten Mutterteil 3 und dem zweiten Mutterteil 4 ist ein Zwischenstück 8 angeordnet, das von einer multigewellten Federscheibe 7, die zum einen an dem ersten Mutterteil 3 und zum anderen an dem Zwischenstück 8 anliegt, gegen das zweite Mutterteil 4 gedrückt wird.

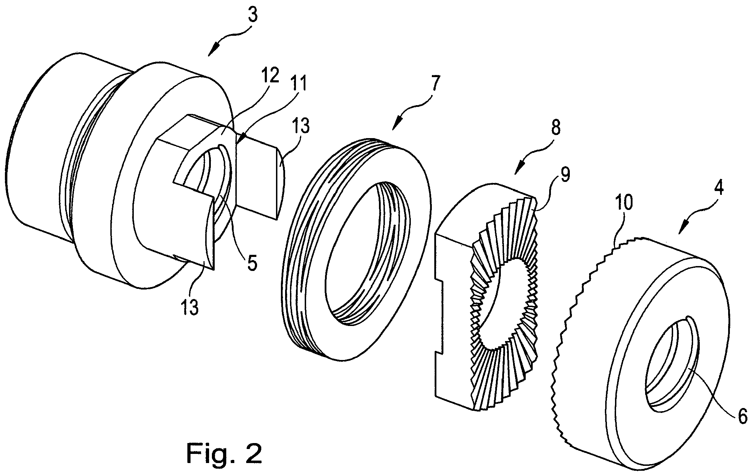

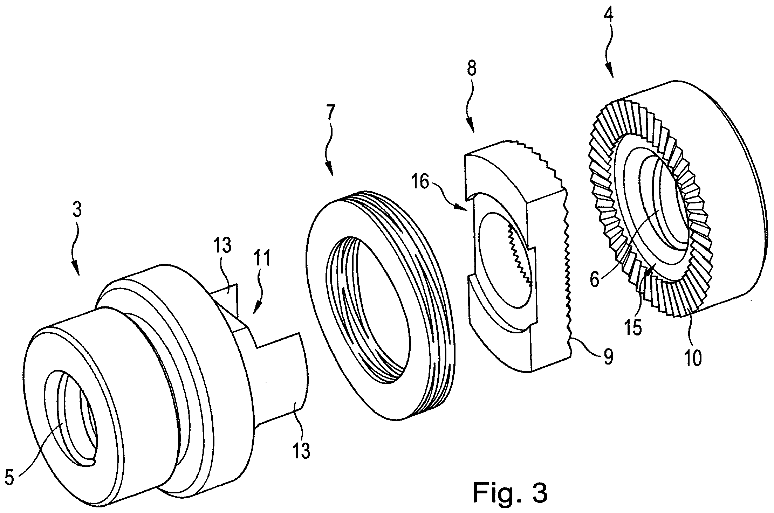

Der Aufbau der erfindungsgemäßen Spindelmutter ist noch etwas deutlicher aus den Explosionsdarstellungen der Fig. 2 und 3 ersichtlich. Das erste Mutterteil 3 umfasst einen im Wesentlichen hohlzylindrischen Vorsprung 12, dessen Außendurchmesser geringer ist als der Außendurchmesser des ersten Mutterteils selbst. Auf den Vorsprung 12 ist die multigewellte Federscheibe 7 aufgesteckt, so dass diese den Vorsprung im zusammengebautem Zustand radial umschließt. Das äußere Ende des Vorsprungs 12 weist eine Ausnehmung 11 auf, in der das plattenförmig ausgebildete Zwischenstück 8 aufgenommen ist. Aufgrund der Ausnehmung verbleiben am äußeren Ende des Vorsprungs lediglich zwei gegenüber angeordnete Seitenführungslaschen 13, an welchen das plattenförmige Zwischenstück 8 axial verschieblich gelagert ist. Gleichzeitig ist das Zwischenstück 8 dadurch relativ zum ersten Mutterteil 3 gegen Verdrehung gesichert. In Fig. 3 ist zu erkennen, dass das Zwischenstück 8 auf der dem ersten Mutterteil 3 zugewandten Seite ebenfalls eine Ausnehmung 16 aufweist, in die der untere Teil des Vorsprungs 12 eintaucht, wenn das erste Mutterteil und das Zwischenstück gegen eine durch die multigewellte Federscheibe 7 erzeugte Federkraft zusammengedrückt werden.

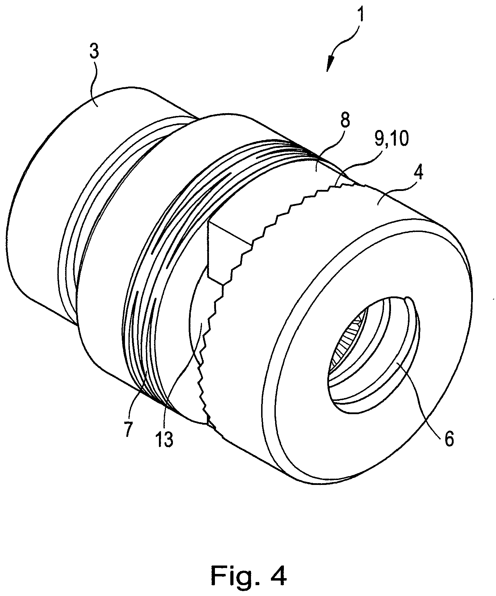

Auf der gegenüberliegenden Seite, die dem zweiten Mutterteil 4 zugewandt ist, weist das Zwischenstück eine Stirnflächenverzahnung 9 auf, die mit einer gegenüberliegenden Stirnflächenverzahnung 10 des zweiten Mutterteils 4 zusammenwirkt, wie dies beispielsweise in Fig. 4 gezeigt ist. In Fig. 3 ist ebenfalls zu erkennen, dass auch das zweite Mutterteil 4 eine Ausnehmung 15 aufweist, in die das vordere Ende des Vorsprungs 12 mit den beiden Seitenführungsabschnitten 13 eintauchen kann.

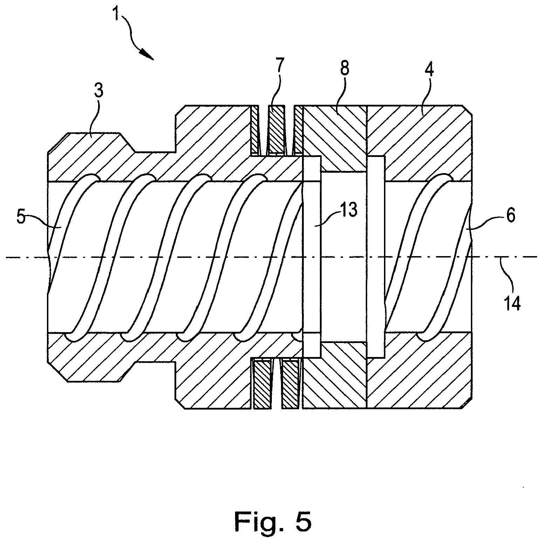

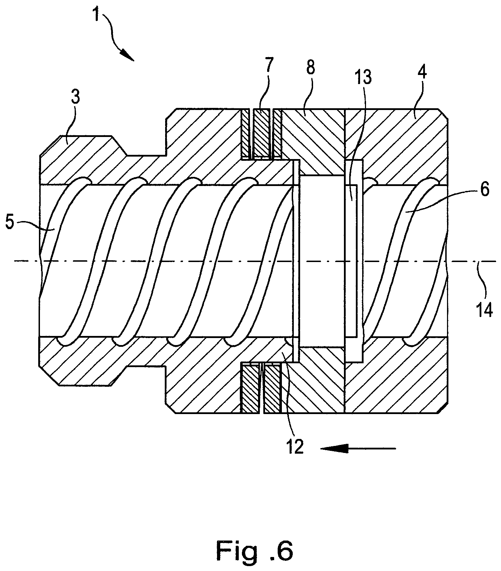

Sämtliche Bauteile weisen eine mittige Durchgangsbohrung auf, wobei das erste Mutterteil 3 mit einem ersten Innengewinde 5, und das zweite Mutterteil 4 mit einem zweiten Innengewinde 6 versehen ist. Im zusammengebauten Zustand stellt das Innengewinde 4 quasi die Fortführung des Innengewindes 5 dar. Die beiden Innengewinde bilden zusammen somit das Gewinde der erfindungsgemäßen Spindelmutter. Dies ist beispielsweise anhand des Längsschnitts in Fig. 5 zu erkennen. In dieser Darstellung ist die erfindungsgemäße Spindelmutter mit einer relativ geringen Vorspannung dargestellt. Die Vorspannung bleibt normalerweise konstant, da die relative Drehlage des zweiten Mutterteils 4 in Bezug auf das erste Mutterteil 3 durch den Eingriff der beiden am Zwischenstück bzw. am zweiten Mutterteil 4 ausgebildeten Verzahnungen 9 und 10 fixiert ist. Durch Aufbringen einer gewissen Kraft kann das zweite Mutterteil gegenüber dem ersten Mutterteil jedoch verdreht werden. Das bedeutet, die beiden Mutterteile können entlang der Spindel, die in den Fig. 5 und 6 aus Anschaulichkeitsgründen nicht dargestellt ist, entweder auseinander oder zusammengeschraubt werden. Die Verzahnungen 9 und 10 von Zwischenstück und zweitem Mutterteil kommen dabei kurzzeitig außer Eingriff und rasten kurze Zeit später um einen bzw. mehrere Zähne versetzt wieder ein. Fig. 6 zeigt die erfindungsgemäße Spindelmutter bei erhöhter Vorspannung. Dies bedeutet, die beiden Mutterteile 3 und 4 sind im Vergleich zu dem in Fig. 5 gezeigten Zustand näher zusammengeschraubt, so dass die Feder 7 etwas stärker komprimiert ist und daher eine größere Vorspannung erzeugt. Deutlich zu erkennen ist, dass der Vorsprung 12 dabei etwas in die Ausnehmung 16 des Zwischenstücks 8 eintaucht. Auf gleiche Weise tauchen die beiden Seitenführungslaschen 13 in die Ausnehmung 15 des zweiten Mutterteils 4 ein.

Das erste Mutterteil 3, das zweite Mutterteil 4 sowie das Zwischenstück 8 bestehen vorzugsweise aus Metall, können jedoch auch aus einem keramischen Material, beispielsweise aus Zirkoniumoxid, bestehen. Die multigewellte Federscheibe 7 ist vorzugsweise aus Stahl gefertigt.

## Patentansprüche

1. Spielfreie Spindelmutter (1) mit einem Gewinde, das mit einer Spindel (2) in Eingriff gebracht werden kann, wobei die Spindelmutter (1) ein erstes Mutterteil (3) mit einem ersten Innengewinde (5) und ein relativ zum ersten Mutterteil (3) verdrehbares zweites Mutterteil (4) mit einem zweiten Innengewinde (6) aufweist, wobei erstes Innengewinde (5) und zweites Innengewinde (6) zusammen das Gewinde der Spindelmutter (1) bilden, wobei die Spindelmutter (1) ein elastisches Element (7) zur Erzeugung einer Vorspannung zwischen erstem Mutterteil (3) und zweitem Mutterteil (4) aufweist, und wobei die Vorspannung durch relative Verdrehung zwischen erstem Mutterteil (3) und zweitem Mutterteil (4) einstellbar ist, **dadurch gekennzeichnet, dass** die Spindelmutter (1) ein Zwischenstück (8) aufweist, das relativ zum ersten Mutterteil (3) gegen Verdrehung gesichert ist, wobei das elastische Element (7) zwischen dem ersten Mutterteil (3) und dem Zwischenstück (8) wirkt, und wobei die relative Verdrehung zwischen dem ersten Mutterteil (3) und dem zweiten Mutterteil (4) durch Arretierung einer relativen Drehlage zwischen dem zweiten Mutterteil (4) und dem Zwischenstück (8) arretierbar ist.

2. Spindelmutter (1) nach Anspruch 1, **dadurch gekennzeichnet, dass** das Zwischenstück (8) erste Formschlusselemente (9) aufweist, die mit zweiten Formschlusselementen (10) des zweiten Mutterteils (4) in Eingriff bringbar sind, wobei die relative Drehlage zwischen dem zweiten Mutterteil (4) und dem Zwischenstück (8) durch den Eingriff zwischen den ersten und zweiten Formschlusselementen (9, 19) arretierbar ist.

3. Spindelmutter (1) nach Anspruch 2, **dadurch gekennzeichnet, dass** die ersten Formschlusselemente (9) an einem Axialanschlag des Zwischenstücks (8), und die zweiten Formschlusselemente (10) an einem gegenüberliegenden Axialanschlag des zweiten Mutterteils (4) ausgebildet sind.

4. Spindelmutter (1) nach einem der Ansprüche 1 bis 3, **dadurch gekennzeichnet, dass** die ersten und zweiten Formschlusselemente (9, 10) jeweils durch die Zähne einer Verzahnung des Zwischenstücks (8) bzw. des zweiten Mutterteils (4) gebildet sind.

5. Spindelmutter (1) nach einem der Ansprüche 1 bis 3, **dadurch gekennzeichnet, dass** die ersten und zweiten Formschlusselemente (9, 10) jeweils durch eine Rändelung des Zwischenstücks (8) bzw. des zweiten Mutterteils (4) gebildet sind.

6. Spindelmutter (1) nach einem der Ansprüche 1 bis 5, **dadurch gekennzeichnet, dass** das Zwischenstück (8) mittels einer Führung axial verschieblich gegenüber dem ersten Mutterteil (3) geführt ist, wobei die Führung durch eine Ausnehmung (11) des ersten Mutterteils (3) realisiert ist, in der das Zwischenstück (8) axial verschieblich gelagert ist.

7. Spindelmutter (1) nach Anspruch 6, **dadurch gekennzeichnet, dass** die Ausnehmung (11) in einem Vorsprung (12) des ersten Mutterteils (3) ausgebildet ist, wobei das elastische Element (7) den Vorsprung (12) umschließt.

8. Spindelmutter (1) nach einem der Ansprüche 1 bis 7, **dadurch gekennzeichnet, dass** das elastische Element (7) eine Federscheibe ist.

9. Spindelmutter (1) nach Anspruch 8, **dadurch gekennzeichnet, dass** die Federscheibe (7) multigewellt ausgeführt ist.

10. Spindelmutter (1) nach einem der Ansprüche 1 bis 9, **dadurch gekennzeichnet, dass** das Zwischenstück (8) im Wesentlichen plattenförmig ausgebildet ist, wobei das plattenförmige Zwischenstück (8) senkrecht zur Achse (14) der Spindelmutter (1) ausgerichtet ist.

## Claims

1. Backlash-free spindle nut (1) with a thread which can be meshed with a spindle (2), whereby the spindle nut (1) has a first nut part (3) with a first internal thread (5) and a second nut part (4), twistable in relation to the first nut part (3), with a second internal thread (6), whereby the first internal thread (5) and the second internal thread (6) together form the thread of the spindle nut (1), whereby the spindle nut (1) has an elastic element (7) to generate a preload between the first nut part (3) and the second nut part (4) and whereby the preload is adjustable through relative twisting between the first nut part (3) and the second nut part (4), **characterized in that** the spindle nut (1) has an intermediate part (8) that is secured against twisting in relation to the first nut part (3), whereby the elastic element (7) works between the first nut part (3) and the intermediate part (8), and whereby the relative twisting between the first nut part (3) and the second nut part (4) can be locked by means of locking a relative twisting position between the second nut part (4) and the intermediate part (8).

2. Spindle nut (1) according to claim 1, **characterized in that** the intermediate part (8) has first form-locking elements (9) that can be meshed with second form-locking elements (10) of the second nut part (4), whereby the relative twisting position between the second nut part (4) and the intermediate part (8) can be locked through the engagement between the first and second form-locking elements (9, 19).

3. Spindle nut (1) according to claim 1, **characterized in that** the first form-locking elements (9) are formed on an axial stop of the intermediate part (8) and the second form-locking elements (10) on an opposite axial stop of the second nut part (4).

4. Spindle nut (1) according to one of the claims 1 to 3, **characterized in that** the first and second form-locking elements (9, 10) are each formed by the teeth of a toothing of the intermediate part (8) and of the second nut part (4).

5. Spindle nut (1) according to one of the claims 1 to 3, **characterized in that** the first and second form-locking elements (9, 10) are each formed by a knurling of the intermediate part (8) and of the second nut part (4).

6. Spindle nut (1) according to one of the claims 1 to 5, **characterized in that** the intermediate part (8) is guided by a guiding in an axially relocatable way opposite to the first nut part (3), whereby the guiding is realized by a recess (11) of the first nut part (3) in which the intermediate part (8) is positioned relocatably.

7. Spindle nut (1) according to claim 6, **characterized in that** the recess (11) is formed in a protrusion (12) of the first nut part (3), whereby the elastic element (7) encloses the protrusion (12).

8. Spindle nut (1) according to one of the claims 1 to 7, **characterized in that** the elastic element (7) is a spring washer.

9. Spindle nut (1) according to claim 8, **characterized in that** the spring washer (7) has a multi-wave design.

10. Spindle nut (1) according to one of the claims 1 to 9, **characterized in that** the intermediate part (8) has an essentially plate-shaped design whereby the plate-shaped intermediate part (8) is aligned perpendicularly to the axis (14) of the spindle nut (1).

## Revendications

1. Ecrou de broche (1) sans jeu, comportant un filetage qui peut être amené en prise avec une broche (2),
l'écrou de broche (1) comprenant une première pièce d'écrou (3) avec un premier filetage intérieur (5), et une deuxième pièce d'écrou (4) avec un deuxième filetage intérieur (6) et pouvant tourner par rapport à la première pièce d'écrou (3),
le premier filetage intérieur (5) et le deuxième filetage intérieur (6) formant ensemble le filetage de l'écrou de broche (1),
l'écrou de broche (1) comprenant un élément élastique (7) destiné à produire une précontrainte entre la première pièce d'écrou (3) et la deuxième pièce d'écrou (4),
et la précontrainte pouvant être réglée par rotation relative entre la première pièce d'écrou (3) et la deuxième pièce d'écrou (4),
**caractérisé en ce que** l'écrou de broche (1) comprend une pièce intermédiaire (8), qui est bloquée à l'encontre d'une rotation relative par rapport à la première pièce d'écrou (3), l'élément élastique (7) agissant entre la première pièce d'écrou (3) et la pièce intermédiaire (8), et la rotation relative entre la première pièce d'écrou (3) et la deuxième pièce d'écrou (4) pouvant être arrêtée en bloquant une position de rotation relative entre la deuxième pièce d'écrou (4) et la pièce intermédiaire (8).

2. Ecrou de broche (1) selon la revendication 1, **caractérisé en ce que** la pièce intermédiaire (8) présente des premiers éléments de liaison par complémentarité de formes (9), qui peuvent être amenés en prise avec des deuxièmes éléments de liaison par complémentarité de formes (10) de la deuxième pièce d'écrou (4), la position de rotation relative entre la deuxième pièce d'écrou (4) et la pièce intermédiaire (8) pouvant être bloquée par la prise réciproque entre les premiers et les deuxièmes éléments de liaison par complémentarité de formes (9, 10).

3. Ecrou de broche (1) selon la revendication 2, **caractérisé en ce que** les premiers éléments de liaison par complémentarité de formes (9) sont formés sur une butée axiale de la pièce intermédiaire (8), et les deuxièmes éléments de liaison par complémentarité de formes (10) sont formés sur une butée axiale opposée de la deuxième pièce d'écrou (4).

4. Ecrou de broche (1) selon l'une des revendications 1 à 3, **caractérisé en ce que** les premiers et deuxièmes éléments de liaison par complémentarité de formes (9, 10) sont formés respectivement par les dents d'une denture de la pièce intermédiaire (8) et respectivement de la deuxième pièce d'écrou (4).

5. Ecrou de broche (1) selon l'une des revendications 1 à 3, **caractérisé en ce que** les premiers et deuxièmes éléments de liaison par complémentarité de formes (9, 10) sont formés respectivement par un moletage de la pièce intermédiaire (8) et respectivement de la deuxième pièce d'écrou (4).

6. Ecrou de broche (1) selon l'une des revendications 1 à 5, **caractérisé en ce que** la pièce intermédiaire (8) est guidée de manière axialement coulissante par rapport à la première pièce d'écrou (3), au moyen d'un guidage, ledit guidage étant réalisé par un évidement (11) de la première pièce d'écrou (3), dans lequel est montée axialement coulissante la pièce intermédiaire (8).

7. Ecrou de broche (1) selon la revendication 6, **caractérisé en ce que** l'évidement (11) est réalisé dans une proéminence (12) de la première pièce d'écrou (3), l'élément élastique (7) entourant la proéminence (12).

8. Ecrou de broche (1) selon l'une des revendications 1 à 7, **caractérisé en ce que** l'élément élastique (7) est une rondelle-ressort.

9. Ecrou de broche (1) selon la revendication 8, **caractérisé en ce que** la rondelle-ressort (7) est d'une configuration multi-ondulée.

10. Ecrou de broche (1) selon l'une des revendications 1 à 9, **caractérisé en ce que** la pièce intermédiaire (8) est d'une configuration sensiblement en forme de plaque, la pièce intermédiaire en forme de plaque (8) étant orientée perpendiculairement à l'axe (14) de l'écrou de broche (1).
